Europäisches Patentamt

European Patent Office

Office européen des brevets

(19)

(11) **EP 0 680 038 B1**

(12) **FASCICULE DE BREVET EUROPEEN**

(45) Date de publication et mention
de la délivrance du brevet:
**31.01.2001 Bulletin 2001/05**

(51) Int Cl.[7]: **G11B 7/12**, G11B 7/135,
G11B 11/10, G01D 5/26,
G01B 11/02, G01B 11/14

(21) Numéro de dépôt: **95400944.5**

(22) Date de dépôt: **26.04.1995**

(54) **Dispositif de contrôle de la position et/ou de la focalisation d'un faisceau lumineux focalisé**

Vorrichtung zur Überwachung der Lage und/oder der Fokussierung eines fokussierten Lichtstrahls

Device for controlling the position and/or the focalisation of a focalised light beam

(84) Etats contractants désignés:
**DE GB IT**

(30) Priorité: **28.04.1994 FR 9405167**

(43) Date de publication de la demande:
**02.11.1995 Bulletin 1995/44**

(73) Titulaire: **COMMISSARIAT A L'ENERGIE
ATOMIQUE
75015 Paris Cédex 15 (FR)**

(72) Inventeurs:
• **Lapras, Valérie
  F-38340 Chevalon de Voreppe (FR)**
• **Gidon, Pierre
  F-38130 Echirolles (FR)**
• **Pouteau, Patrick
  F-38340 Chevalon de Voreppe (FR)**

(74) Mandataire: **Dubois-Chabert, Guy et al
BREVATOME
3, rue du Docteur Lanceraux
75008 Paris (FR)**

(56) Documents cités:
**EP-A- 0 557 017        EP-A- 0 611 145
FR-A- 2 606 921        FR-A- 2 692 683**

• **PATENT ABSTRACTS OF JAPAN vol. 13, no. 19
(P-814), 18 janvier 1989 & JP 63 223710 A
(MASAYUKI IZUTSU), 19 septembre 1988,**
• **PATENT ABSTRACTS OF JAPAN vol. 17, no. 445
(P-1593), 16 août 1993 & JP 05 099621 A (NIPPON
TELEGR &TELEPH CORP), 23 avril 1993,**
• **R. ULRICH ET AL.: "SELF-IMAGING IN
HOMOGENEOUS PLANAR OPTICAL
WAVEGUIDES" APPLIED PHYSICS LETTERS,
vol. 27, no. 6, 15 septembre 1975, USA, pages
337-339, XP002044774**
• **HADLEY G. R.: "TRANSPARENT BOUNDARY
CONDITION ON BEAM PROPAGATION" OPTICS
LETTERS, vol. 16, no. 9, 1 mai 1991, USA, pages
624-626, XP002044775**
• **R. ULRICH ET AL.: "RESOLUTION OF
SELF-IMAGES IN PLANAR OPTICAL
WAVEGUIDES" JOURNAL OF OPTICAL
SOCIETY OF AMERICA, vol. 68, no. 5, mai 1978,
pages 583-592, XP002044776**
• **M. D. FEIT ET AL.: "LIGHT PROPAGATION IN
GRADED-INDEX OPTICAL FIBERS" APPLIED
OPTICS, vol. 17, no. 24, 15 décembre 1978, pages
3990-3998, XP002044777**

**Description**

Domaine technique

La présente invention a pour objet un dispositif en optique intégrée pour le contrôle de la focalisation et de la position d'une image.

L'un des domaines d'application privilégié de cette invention est le domaine des mémoires optiques et/ou magnéto-optiques. En effet, les têtes de lecture des systèmes à mémoires optiques ou magnéto-optiques comportent généralement une lentille de focalisation sur le disque, montée sur un actionneur à 2 directions permettant de maintenir la focalisation et le suivi de piste lors de la rotation du disque. Cette opération est nécessaire pour garantir un bon rapport signal sur bruit pendant les phases de lecture, et une bonne définition des points mémoires enregistrés sur le disque pendant les phases d'écriture.

Le circuit optique intégré décrit ci-après sert au contrôle de la focalisation et du suivi de piste. Il permet de générer les signaux d'erreur correspondants, servant à commander l'actionneur.

Lorsque ce dispositif est appliqué à une tête de lecture magnéto-optique, le contrôle de la position de l'image devient un contrôle du suivi de la piste d'enregistrement.

Plus généralement, ce circuit optique intégré peut être utilisé pour analyser la forme et la position d'un faisceau : il peut donc s'appliquer à certains capteurs de déplacement.

Etat de la technique antérieure

Un dispositif en optique intégrée pour le contrôle de la focalisation et de la position d'une image est connu par la demande de brevet français FR-A-2 692 683.

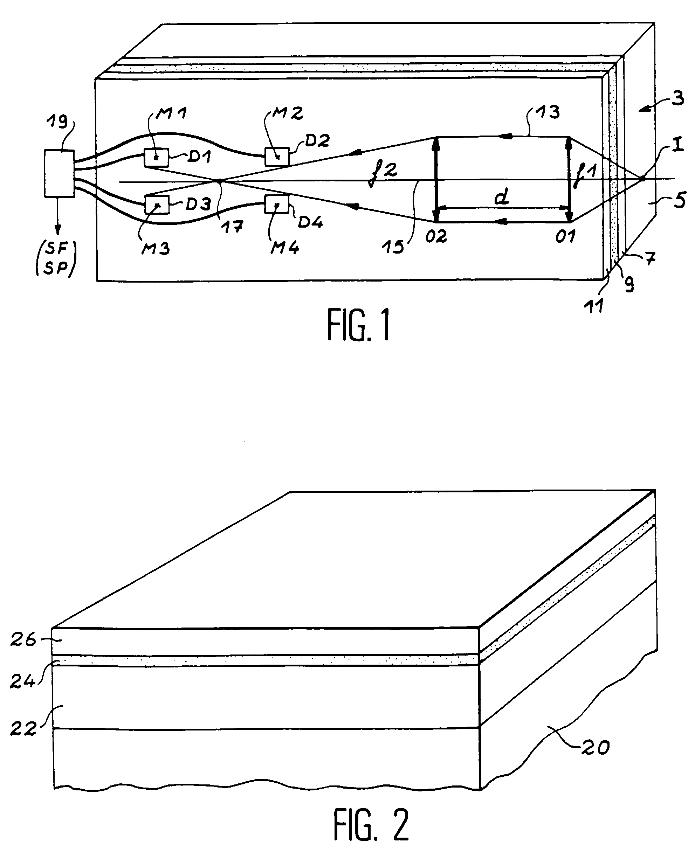

Un mode de réalisation de ce dispositif est illustré sur la figure 1. Sur cette figure, on voit une structure de guidage 3 avec un substrat 5, une première couche de confinement 7, une couche guide 9 et une seconde couche de confinement 11. Dans cette structure sont intégrés :

- une première optique 01, ayant une fonction de collimation, pour le faisceau lumineux provenant d'une image I ; cette optique possède une focale $f_1$ et elle délivre un faisceau collimaté 13,
- une seconde optique 02, ayant une fonction de focalisation, séparée de la première 01 d'une distance d et qui reçoit le faisceau collimaté 13 ; cette seconde optique possède un axe optique 15, un foyer 17 et une distance focale $f_2$ ;
- quatre photodétecteurs $D_1$, $D_2$, $D_3$, $D_4$ situés en quatre points $M_1$, $M_2$, $M_3$, $M_4$ tous situés dans le plan de la couche guide 9,
- un moyen 19 pour former diverses sommes et différences $S_F$, $S_P$ à partir des signaux délivrés par les quatre photodétecteurs.

Les points $M_2$ et $M_4$ sont situés de part et d'autre de l'axe optique 15 et à une distance de l'optique 02 inférieure à la distance focale $f_2$. En revanche, les points $M_1$ et $M_3$ sont situés au-delà du foyer 17, mais toujours symétriquement par rapport à l'axe 15. En d'autres termes, les points $M_1$, $M_2$, $M_3$, $M_4$ sont les sommets d'un rectangle dont le foyer 17 est le centre. Mais d'autres dispositions sont possibles (en trapèze, par exemple, avec un écart entre $M_2$ et $M_4$ plus petit ou plus grand que l'écart entre $M_1$ et $M_3$, ou encore en carré).

Dans cet exemple, les photodétecteurs proprement dits, $D_1$, $D_2$, $D_3$, $D_4$ sont "hybridés" sur la structure optique, c'est-à-dire rapportés sur celle-ci. Le circuit 19 forme d'abord la somme des signaux délivrés par les photodétecteurs $D_1$ et $D_3$ et la somme des signaux délivrés par les photodétecteurs $D_2$ et $D_4$. Il effectuera ensuite la différence entre ces sommes, soit :

$$S_F = (D_1 + D_3) - (D_2 + D_4)$$

où chaque signal est noté par la référence du photodétecteur qui le délivre, et où $S_F$ désigne le signal d'erreur de focalisation.

Pour contrôler la position par rapport à la piste, le circuit 19 calcule le signal d'erreur de position $S_P$ donné par :

$$S_P = (D_2 + D_3) - (D_1 + D_4).$$

Lors d'une défocalisation, le faisceau provenant de l'optique 02 converge soit avant, soit après le foyer 17, privilégiant ainsi soit le couple $D_1$, $D_3$, soit le couple $D_2$, $D_4$. Dans les deux cas, le signal $S_F$ se trouve déséquilibré, dans un sens ou dans l'autre (mais le signal $S_P$ reste invariant).

Lors d'un décalage du faisceau par rapport à une position de référence (une piste dans le cas d'un enregistrement magnéto-optique), le faisceau décalé dans un sens privilégie $D_2$ et $D_3$, et dans l'autre $D_4$ et $D_1$. Dans les deux cas, le signal $S_P$ est déséquilibré (mais le signal $S_F$ reste inchangé).

Ce dispositif peut être utilisé de façon autonome, si on lui associe une optique de collimation, ou bien il peut être associé à la tête de lecture intégrée, décrite dans le document FR-A-2 606 921.

Quoique satisfaisant à certains égards, ce dispositif présente des inconvénients :

- il présente des pertes optiques très importantes, étant donné que chaque détecteur $D_1$, $D_2$, $D_3$, $D_4$ n'intercepte qu'une petite partie du faisceau,
- les fonctions de contrôle de la focalisation et du suivi de piste sont, dans ce dispositif, interdépendantes : l'une fonctionne difficilement sans l'autre et, en tous cas, modifie l'autre,
- la réponse du dispositif est difficile à équilibrer au repos : il existe toujours une différence entre, par exemple, les intensités des détecteurs $D_2 + D_4$ et $D_1 + D_3$, même lorsque le faisceau est bien focalisé et bien positionné sur la piste.

La présente invention a justement pour but de remédier à ces inconvénients en proposant un dispositif de contrôle de la focalisation et/ou du suivi de piste (ou de la position), réalisé en optique intégrée, minimisant les pertes optiques (puisque tout le faisceau est utile), rendant indépendantes les deux fonctions de contrôle de la focalisation et du suivi de piste, et pouvant être aisément équilibré au repos.

Exposé de l'invention

De façon plus précise, l'invention concerne un dispositif d'optique intégrée pour le contrôle de la position et/ ou de la focalisation d'un faisceau lumineux comportant une structure de guidage en optique intégrée, caractérisé en ce qu'il comporte en outre :

- un guide d'onde multimode ou bien un ensemble de guides monomodes répartis de façon à pouvoir échanger de l'énergie, qui est intégré à la structure de guidage et qui est apte, lorsque la répartition du faisceau lumineux qui est dirigé à l'entrée du guide ou de l'ensemble de guides comporte un seul maximum, à transformer cette répartition en une répartition à N maxima ($N \geq 2$) en sortie du guide ou de l'ensemble de guides,
- des moyens de détection aptes à mesurer la répartition de l'intensité en sortie du guide d'onde ou de l'ensemble de guides,
- des moyens d'analyse de la répartition d'intensité, reliés aux moyens de détection.

Du fait du guidage du faisceau dans un guide multimode ou dans un ensemble de guides monomodes, les pertes optiques deviennent négligeables par rapport à celles constatées dans le dispositif selon l'art antérieur.

En outre, les fonctions de contrôle, d'une part de la position et, d'autre part, de la focalisation sont rendues indépendantes, puisque :

- lorsqu'il y a variation de la position du faisceau lumineux à partir de la position initiale, il y a modification de la position des maxima en sortie,
- de façon surprenante, lorsqu'il y a variation de la focalisation du faisceau lumineux, il y a passage, en sortie de guide, d'une répartition avec N maxima à une répartition avec N' maxima, N' étant différent de N (par exemple : N'=N$\pm$1).

Enfin, le dispositif est beaucoup plus aisé à équilibrer au repos.

Les moyens de détection peuvent être disposés de façon à pouvoir mesurer l'intensité en au moins N points en sortie du guide d'onde, ou de l'ensemble des guides, appelés points de mesure.

Ils peuvent, de façon alternative, comprendre un détecteur apte à fournir une image continue de la répartition d'intensité en sortie du guide.

Ce dispositif peut également comporter des moyens optiques intégrés à la structure de guidage pour focaliser le faisceau lumineux à l'entrée du guide d'onde multimode ou de l'ensemble des guides monomodes et/ou des moyens optique agrandisseurs du faisceau lumineux.

Enfin, les moyens d'analyse peuvent calculer les intensités $I_n$ ($1 \leq n \leq N$) aux N points de mesure et en déduire un signal d'erreur de position $S_P$ et/ou un signal d'erreur de focalisation $S_F$.

Description détaillée des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1 représente un dispositif d'optique intégrée selon l'art antérieur, pour le contrôle de la focalisation et de la position d'une image,
- la figure 2 représente une structure multicouche pour préparer une structure intégrée utilisable dans un dispositif selon l'invention,
- la figure 3a représente schématiquement et en perspective, un dispositif selon la présente invention,
- la figure 3b représente schématiquement, en vue de dessus, un dispositif selon l'invention,
- la figure 4 représente un guide optique multimode avec la formation d'images simples et multiples d'un point objet P.
- la figure 5 représente une variante du dispositif employant des microguides entre les points de mesure et les détecteurs,
- la figure 6 représente une variante du dispositif, avec un système optique agrandisseur,
- les figures 7a et 7b représentent respectivement la répartition des intensités en entrée et en sortie de guide et la répartition détaillée en sortie, pour un faisceau correctement positionné et focalisé,
- les figures 8a et 8b représentent respectivement la répartition des intensités en entrée et en sortie de guide et la répartition détaillée en sortie pour un faisceau défocalisé vers l'avant,
- les figures 9a et 9b représentent respectivement la répartition des intensités en entrée et en sortie de guide et la répartition détaillée en sortie pour un faisceau défocalisé vers l'arrière,
- les figures 10a et 10b représentent respectivement la répartition des intensités en entrée et en sortie de guide et la répartition détaillée en sortie pour un faisceau dont la position est décalée,
- les figures 11 et 13 représentent la réponse du circuit de contrôle en fonction d'une erreur de focalisation, respectivement sans et avec erreur de position,
- la figure 12 représente la réponse du circuit de contrôle en fonction d'une erreur de position,
- la figure 14 représente un guide et N points de mesure en sortie,
- la figure 15 représente un circuit intégré de détection complet, pour tête de lecture/écriture classique,
- les figures 16 à 18 représentent des exemples de tête de lecture magnéto-optique classique équipé d'un dispositif intégré de détection selon l'invention.

Exposé détaillé de modes de réalisation

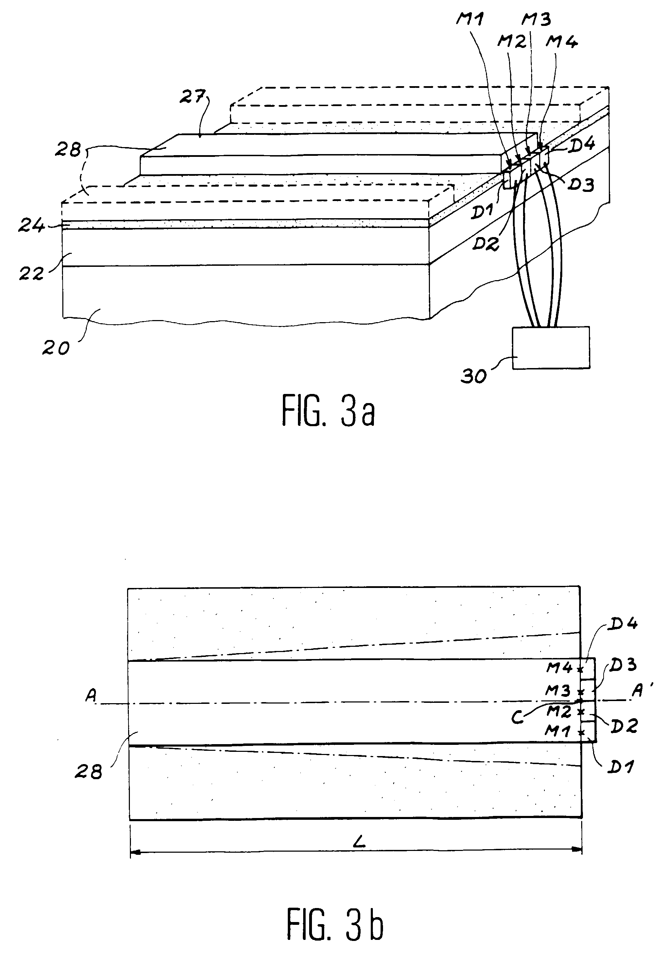

Un dispositif d'optique intégrée selon l'invention est illustré sur les figures 3a et 3b.

Ce dispositif comporte une structure de guidage optique intégrée formée à partir d'une structure illustrée sur la figure 2 et comprenant un substrat 20, par exemple en silicium, une première couche de confinement 22, par exemple en silice $SiO_2$ d'indice 1,45, une couche guidante 24, par exemple en $Si_3N_4$ d'indice 1,99 et une seconde couche de confinement 26, par exemple en $SiO_2$ d'indice 1,47 (ces indices sont donnés pour $\lambda=0,78\,\mu m$). L'épaisseur des première et troisième couches est respectivement d'environ 2 et 1 $\mu m$. Celle de la couche intermédiaire est comprise entre 100 et 200 nm et vaut par exemple 165 nm.

Le dispositif selon l'invention n'est pas limité à cette structure, même si les exemples numériques donnés par la suite concernent ce cas particulier.

En fait, ce dispositif peut être réalisé sur n'importe quel type de structure optique intégrée. En particulier, il peut être réalisé dans du verre, dans du niobate de lithium, dans des structures multicouches semi-conductrices telles que des structures III-V ou II-VI.

Par exemple, on peut utiliser l'une des structures suivantes :

- verre/verre dopé par échange d'ions/$SiO_2$,
- $LiNbO_3$/$LiNbO_3$ dopé par diffusion de titane/$LiNbO_3$,

dans ces deux premiers cas, la première couche de confinement ou couche tampon est confondue avec le substrat,

- $Si$/$SiO_2$/$Si_3N_4$/$SiO_2$,
- $Si$/$SiO_2$/$SiO_xN_y$/$SiO_2$ avec $0 \leq x \leq 2$ et $0 \leq y \leq 4/3$,
- $Si$/$SiO_2$/$SiO_2$ dopé/$SiO_2$, les dopants de la couche guide étant tels que celle-ci a un indice de réfraction supérieur à celui des couches adjacentes, comme par exemple le phosphore, le germanium, le titane ou l'azote.

Il est en outre possible de remplacer la couche guide en $Si_3N_4$ par de l'alumine et/ou de doper la silice utilisée comme couche tampon et comme couche supérieure de la structure guidante par un dopant diminuant l'indice de réfraction de la silice tel que le fluor ou encore par un dopant augmentant l'indice de réfraction de la silice. Bien entendu, la couche guide doit toujours présenter un indice de réfraction supérieur à celui de la couche tampon et à celui de la couche supérieure associées.

Un procédé de réalisation d'une telle structure mettra en oeuvre les techniques usuelles de dépôt des couches. Parmi celles-ci, on peut citer le dépôt chimique en phase vapeur assisté par plasma, notamment quand il s'agit de couches en silice ($SiO_2$), (technique connue en terminologie anglo-saxonne sous le signe PECVD), ou d'autres procédés de dépôts chimiques en phase vapeur telle que l'hydrolyse à la flamme et le dépôt chimique en phase vapeur à basse pression, notamment lorsqu'il s'agit de couches de nitrure de silicium ($Si_3N_4$) (technologie désignée en terminologie anglo-saxonne par le sigle LPCVD).

Par ailleurs, lorsque ces couches ont le même constituant de base, par exemple la silice, pour avoir une différence d'indice de réfraction, on effectue un dopage d'une, de plusieurs, ou de toutes ces couches par des méthodes connues parmi lesquelles on peut citer l'utilisation de réactions chimiques en présence de gaz réactifs, l'implantation ionique et la diffusion d'ions ou d'atomes divers.

Sur une structure de guidage telle que celle de la figure 2 et qui est décrite ci-dessus, on réalise un guide d'onde multimode, par exemple un microguide. On entend par guide multimode un guide présentant au moins dans une des directions (soit la direction contenue dans le plan des couches, soit la direction perpendiculaire à ce plan) plusieurs modes de propagation, l'autre direction pouvant présenter un seul mode de propagation. On réalise de tels microguides, par exemple, par gravure totale ou partielle de la couche supérieure de confinement ou de la couche guide selon des techniques classiques, par exemple par photolithographie par masquage.

Lorsque la couche supérieure de confinement est gravée, on obtient alors une structure telle que celle illustrée sur la figure 3a où les références 20, 22, 24 ont la même signification que sur la figure 2 et où la référence 27 désigne la couche gravée. Le microguide 28 est défini et formé par la superposition des trois couches 22, 24 et 27. En fait, on peut également avoir une pluralité de microguides sur la même structure, ainsi qu'illustré sur la figure 3a en traits interrompus.

Le microguide 28 a été représenté droit mais il peut avoir également la forme d'un entonnoir, comme illustré en traits interrompus sur la figure 3b. Si le guide est droit, il aura par exemple une largeur de l'ordre de 10 à plusieurs dizaines de μm, par exemple 15 μm.

Le guide multimode 28 présente un axe de symétrie, repéré sur la figure 3b par (AA'), que le guide soit droit ou en entonnoir.

La longueur L du guide multimode 28 est telle que, lorsqu'un faisceau incident I dirigé sur la section d'entrée du guide présente une répartition d'intensité comportant un seul maximum, on obtienne un faisceau de sortie présentant un nombre N de maximum, avec $N \geq 2$.

Les conditions pour obtenir un tel résultat sont données, par exemple, par la méthode analytique décrite pour des guides multimodes dans un article de R. Ulrich et al., intitulé "Self imaging in homogeneous planar optical waveguides", publié dans Applied Physics Letters, vol.27, n°6, 15 septembre 1975, pages 337-339.

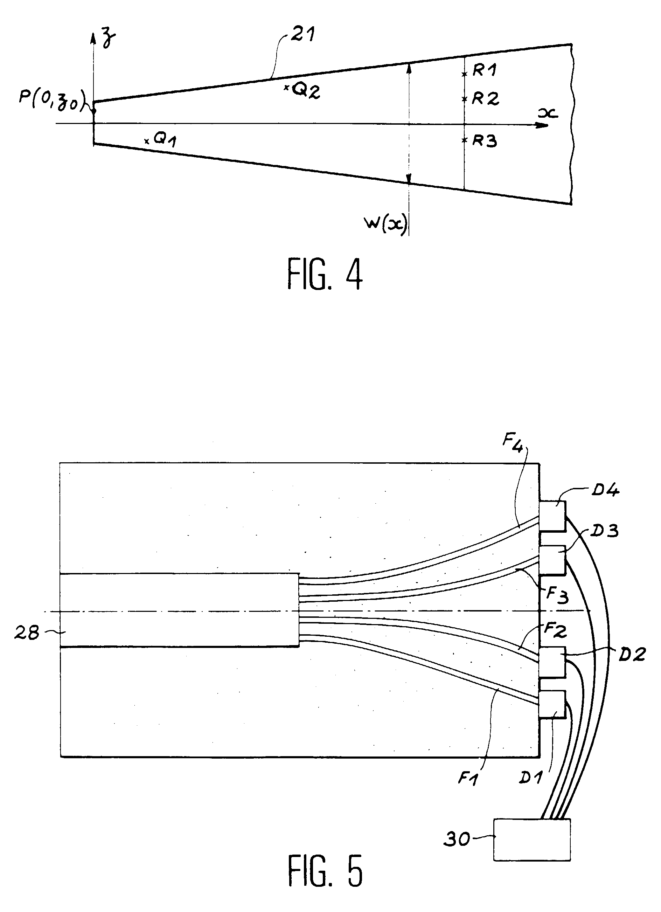

Selon cet article, ainsi qu'illustré sur la figure 4, pour tout guide multimode 21, parallèle ou en entonnoir, et pour tout point objet P à l'intérieur du guide, il existe un certain nombre d'images réelles simples de P en différents points $Q_1$, $Q_2$, $Q_3$, etc. du guide, en aval de P dans le sens de propagation de la lumière et, à des positions intermédiaires, des images multiples de P (par exemple, en $R_1$, $R_2$, $R_3$ sur la figure 4).

Les problèmes d'aberrations ainsi que de résolution sont traités par ailleurs, dans l'article de R. Ulrich et al., intitulé "Resolution of self-images in planar optical waveguides", paru dans Journal of Optical Society of America, Vol. 68, N°5, 1978, p. 583-592.

Quelles que soient les caractéristiques du guide multimode, on peut déterminer la longueur nécessaire pour obtenir une répartition d'intensité à plusieurs maxima en sortie pour une répartition à un seul maximum en entrée, en appliquant des méthodes de type numériques telles que la "beam propagation method" et ses variantes, décrites dans l'article de M.D. Feit et al. ("Light propagation in graded-index optical fibers", Applied Optics 1978, vol.17, n°24, pp. 3990-3998), de G.R. Hadley ("Transparent boundary condition for beam propagation", Optics Letters, 1991, vol. 16, n°9, pp. 624-626) et dans l'article de Chung et al. ("An assessment of Finite Difference Beam propagation method", IEEE Journal of Quantum Electronics, vol. 26, n°8, pp. 1335-1339, 1990). Cette méthode de calcul numérique, qui repose sur la résolution de l'équation d'onde est plus précise que la méthode analytique citée ci-dessus. On peut même se procurer dans le commerce des logiciels de calcul basés sur cette méthode numérique (par exemple, le BPM CAD décrit dans National Optics Institute Bulletin, Special Edition Nov. 1991, Quebec, Canada).

De façon alternative, on peut utiliser, à la place d'un guide multimode 28 large, plusieurs guides monomodes de préférence parallèles entre eux, suffisamment proches pour que leurs modes puissent échanger de l'énergie. Pratiquement, les guides monomodes voisins doivent être situés à une distance inférieure à 10μm l'un de l'autre, de préférence inférieure à 5μm. La largeur d'un seul guide monomode est d'environ 1 à 2 μm. La longueur nécessaire

pour obtenir le même résultat qu'avec un guide multimode, c'est-à-dire une répartition d'intensité à plusieurs maxima en sortie pour une répartition d'intensité à un seul maximum en entrée, est obtenue en appliquant par exemple les mêmes méthodes numériques que citées ci-dessus.

Les microguides monomodes sont obtenus, comme dans le cas des multimodes, par gravure selon les techniques déjà mentionnées ci-dessus.

Le dispositif comporte, en outre, des moyens de mesure de la répartition d'intensité en des points $M_1$, $M_2$, etc. à la sortie du guide multimode (ou des guides monomodes ; on prendra par la suite, l'exemple d'un guide multimode puisque les considérations relatives à la détection sont les mêmes pour les deux modes de réalisation).

Si la sortie du guide est plane et perpendiculaire à l'axe de symétrie (AA'), ces moyens sont situés dans un plan perpendiculaire à cet axe et proche de la sortie du guide. Ils sont, en outre, répartis symétriquement par rapport au centre C de la sortie du guide multimode, situé sur l'axe (AA'), comme on peut le voir sur la figure 3b.

Ces moyens peuvent être constitués d'une pluralité (il en faut au moins 2) de photodétecteurs $D_1$, $D_2$,... respectivement situés en $M_1$, $M_2$,..., reliés à un dispositif 30 de mesure du signal fourni par chaque photodétecteur, à partir duquel il est possible de déduire l'intensité relative $I_i$ en sortie du guide, pour chacun des points $M_i$.

Il peut également y avoir plusieurs détecteurs par point de mesure.

Le traitement des signaux par le dispositif 30 peut être réalisé de plusieurs manières. On peut, par exemple, numériser chaque signal délivré par un photodétecteur (et cela à l'aide d'un convertisseur analogique-numérique) et réaliser ensuite le traitement sous forme numérique à l'aide d'un microprocesseur. On peut aussi traiter analogiquement les signaux délivrés par les photodétecteurs à l'aide de circuits de type amplificateurs ou amplificateurs opérationnels.

Le dispositif 30 intègre aussi des moyens pour réaliser différentes opérations sur les quantités mesurées, notamment des opérations de combinaison de ces quantités entre elles, opérations qui sont décrites plus loin. Il peut aussi évidemment intégrer tout moyen nécessaire à la mémorisation des données.

Les photodétecteurs peuvent être intégrés à la structure multicouche, ou rapportés sur celle-ci, comme illustré sur les figures 3a et 3b. Sur ces figures, les photodétecteurs sont disposés directement à la sortie du guide multimode, mais ils peuvent être également, selon une variante illustrée sur la figure 5, reliés aux points $M_i$ par des microguides ou fibres optiques $F_i$. Dans ce dernier cas, chacun des photodétecteurs $D_i$ peut être aussi soit intégré à, soit rapporté sur la structure de guidage $F_i$ correspondante.

De façon alternative, la détection peut être réalisée par un détecteur "continu", par exemple une barrette de photodétecteurs ou une caméra qui permet d'obtenir une "image" de la répartition d'intensité en sortie du guide multimode, le signal d'erreur de focalisation et/ou de position sera obtenu très précisément par comparaison avec des répartitions d'intensités théoriques calculées et/ou enregistrées précédemment ou, plus généralement, avec des répartitions d'intensité de référence. Ces signaux peuvent également être obtenus comme dans le cas de détecteurs ponctuels en comparant les intensités en certains points ou groupe de points, par exemple de la manière décrite ci-après.

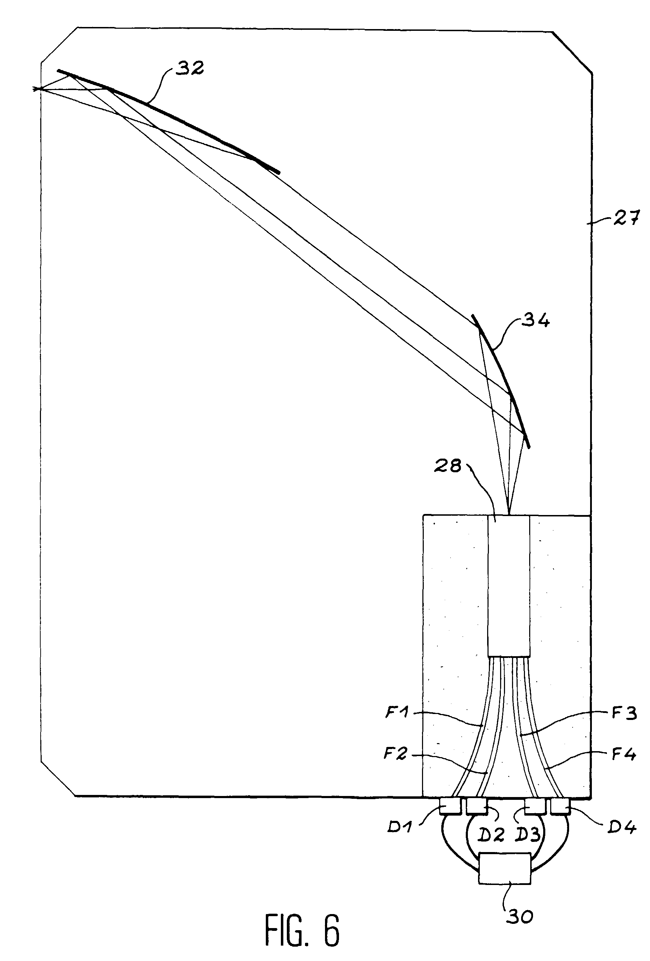

Le dispositif selon l'invention peut également comprendre une optique de focalisation et/ou une optique de collimation, la combinaison des deux permettant d'obtenir un agrandissement ou une amplification de défocalisation et/ou de l'erreur de position du faisceau contrôlé. Une telle variante est illustrée sur la figure 6, qui représente une structure en optique intégrée telle que décrite ci-dessus, dans la version dans laquelle les détecteurs $D_i$ sont reliés aux points de mesure $M_i$, par des microguides ou des fibres optiques $F_i$ et avec un guide d'onde multimode 28. L'ensemble est intégré sur une structure 27 sur laquelle sont également intégrés :

- une première optique 32, ayant une fonction de collimation, pour le faisceau lumineux incident ; cette optique possède une distance focale $f_1$. Cette première optique 32 peut être constituée, par exemple, par un miroir parabolique.
- une seconde optique 34, ayant une fonction de focalisation, séparée de la première par une distance d, et qui reçoit le faisceau collimaté par la première optique 32 ; cette seconde optique possède un axe optique, un foyer et une distance focale $f_2$. Ce peut être également un miroir parabolique.
- l'entrée du guide d'onde multimode est placé au foyer de la seconde optique 34 et son axe (AA') est aligné avec l'axe optique de la seconde optique 34.

Un effet "d'amplification" des défauts de focalisation et de position peut être obtenu avec un tel système. On choisira pour cela $f_2 > f_1$ et $d \gg f_2$ et $f_1$. En effet, un défaut de focalisation z à l'entrée du système se traduira par un défaut de focalisation

$$\left(\frac{f_2}{f_1}\right)^2 z$$

à l'entrée du guide multimode, tandis qu'un défaut x de position, à l'entrée du système, se traduira par un défaut

$$\left(\frac{f_2}{f_1}\right)x$$

à l'entrée du guide multimode (donc à la sortie du système des 2 optiques 32 et 34).

Le fonctionnement d'un dispositif selon l'invention va maintenant être décrit dans le cas de 4 détecteurs $D_1$, $D_2$, $D_3$, $D_4$ en sortie de guide.

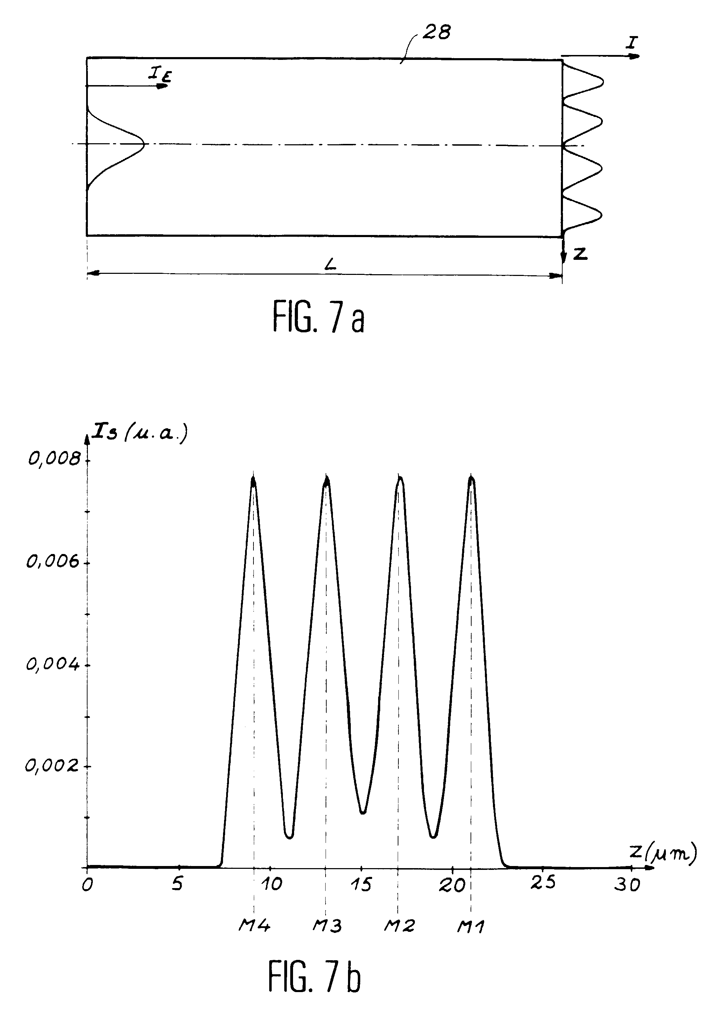

La largeur W et la longueur L du guide sont choisis de façon à ce que, si le système est au repos, c'est-à-dire si le faisceau d'entrée $I_E$ comporte une répartition d'intensité à un seul maximum, centré sur l'axe de symétrie du guide, on obtient en sortie une répartition d'intensité avec 4 maxima, en 4 points $M_1$, $M_2$, $M_3$, $M_4$, répartis symétriquement par rapport à l'axe de symétrie du guide (on dit aussi qu'on obtient 4 images en sortie). Cette situation est illustrée sur les figures 7a et 7b pour un guide présentant les caractéristiques suivantes :

- structure optique intégrée du type $Si/SiO_2/Si_3N_4/SiO_2$,
- guide multimode selon la direction contenue dans le plan des couches, de largeur $W=15\mu m$ obtenu par gravure totale du superstrat de longueur $L=136\mu m$, $\lambda=0,78$ $\mu m$, $n(SiO_2)=1,45$ (couche 22), $n(Si_3N_4)=1,99$ (couche 24), $n(SiO_2)=1,47$ (couche 26).
- système optique "agrandisseur" de grandissement 3.

La figure 7a représente schématiquement la répartition des intensités en entrée et en sortie de guide, la figure 7b représente de façon plus détaillée la répartition des images en sortie. Au repos, les intensités $I_1$, $I_2$, $I_3$, $I_4$ mesurées respectivement en $M_1$, $M_2$, $M_3$, $M_4$ sont égales :

$I_1=I_2=I_3=I_4$, et :

$$\begin{cases} S_F = (I_2 + I_3) - (I_1 + I_4) = 0 \\ S_P = (I_1 + I_2) - (I_3 + I_4) = 0 \end{cases}$$

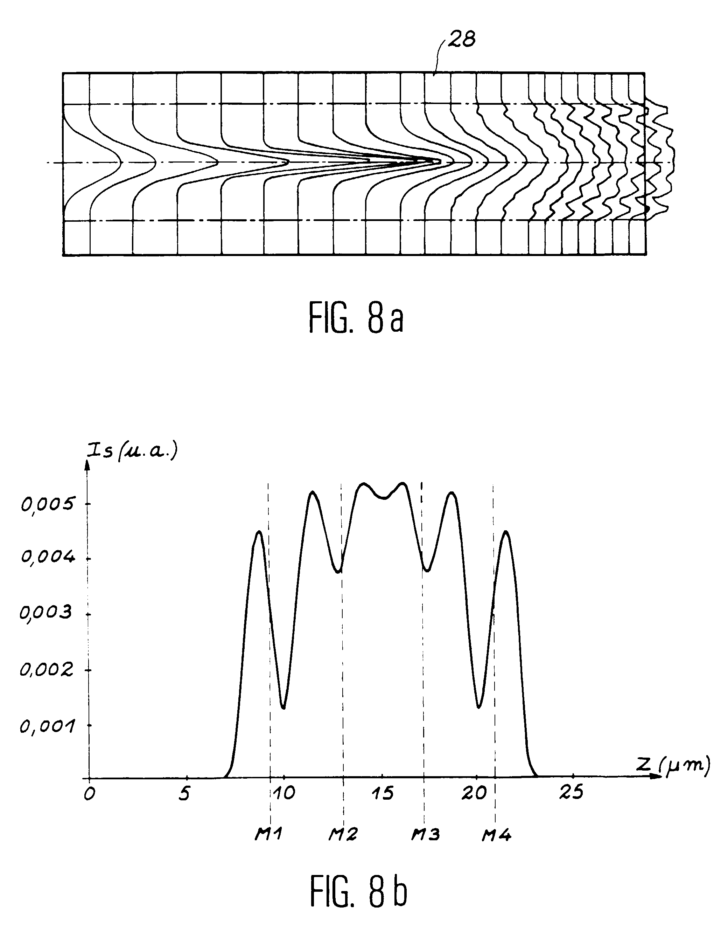

Lorsque le faisceau d'entrée reste centré, mais est défocalisé vers l'avant, la répartition d'intensité en entrée de guide est modifiée, de même que la répartition en sortie qui évolue vers une répartition symétrique à 5 images. Ceci est illustré sur les figures 8a et 8b, la première représentant l'évolution de l'image dans le guide multimode, la seconde la répartition détaillée de l'intensité en sortie de guide. L'intensité mesurée en $M_2$ et $M_3$ est supérieure à celle mesurée en $M_1$ et $M_4$. Le signal $S_F=(I_2+I_3)-(I_1+I_4)$ est déséquilibré dans le sens positif.

Le signal $S_P=(I_1+I_2)-(I_3+I_4)$ reste nul, puisque $I_1=I_4$ et $I_2=I_3$ (voir figure 8b).

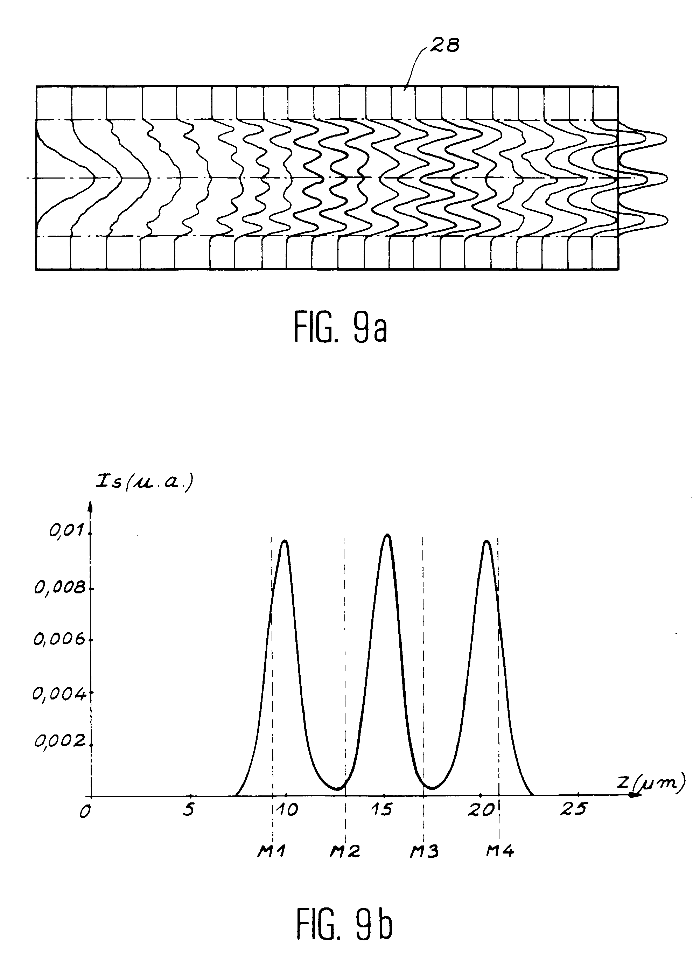

Lorsque le faisceau d'entrée reste centré, mais est défocalisé vers l'arrière, la répartition d'intensité en entrée de guide est modifiée, de même que la répartition en sortie qui évolue vers une répartition symétrique à 3 images. Ceci est illustré sur les figures 9a et 9b, la première représentant l'évolution de l'image dans le guide multimode, la seconde la répartition détaillée de l'intensité en sortie de guide. Le signal $S_F=(I_2+I_3)-(I_1+I_4)$ est déséquilibré dans le sens négatif.

Le signal $S_P= (I_1+I_2)-(I_3+I_4)$ reste toujours nul, puisque $I_1=I_4$ et $I_2=I_3$ (voir figure 9b).

Par conséquent, dans chacun de ces deux premiers cas, la symétrie de la répartition des images par rapport à l'axe AA' est conservée et le signal $S_P$ n'est jamais affecté. Aussi, lorsqu'il s'agira de contrôler la focalisation, le circuit 30 calculera $S_F=(I_2+I_3)-(I_1+I_4)$.

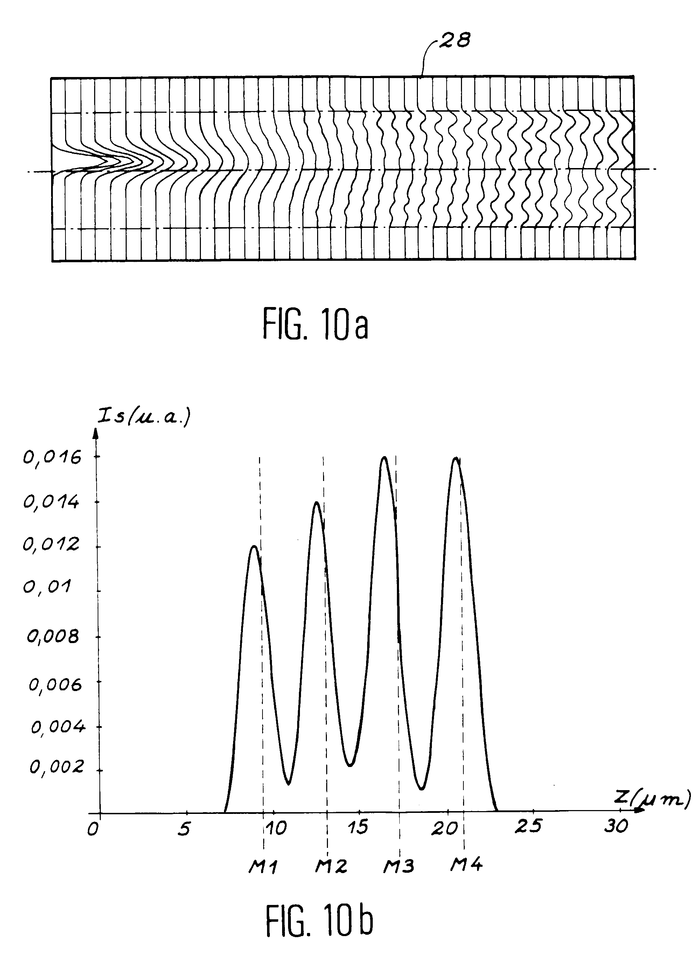

Lorsque le faisceau d'entrée est décentré (mais pas défocalisé), c'est-à-dire lorsqu'il y a une erreur de suivi de piste ou de position dans un sens, la répartition d'intensité à la sortie du guide multimode se trouve déséquilibrée, cette fois de manière dissymétrique par rapport à l'axe AA'. Ceci est illustré sur les figures 10a et 10b, la première représentant l'évolution de l'image dans le guide multimode, la seconde la répartition détaillée de l'intensité en sortie de guide.

Le signal $S_P=(I_1+I_2)-(I_3+I_4)$ est déséquilibré dans le sens négatif alors que le signal $S_F=(I_2+I_3)-(I_1+I_4)$ reste sensiblement nul.

Lorsqu'il y a erreur de suivi de piste ou de position dans l'autre sens, le signal $S_P$ est déséquilibré dans le sens positif, $S_F$ restant encore nul.

Ainsi, en cas d'erreur de suivi de piste, les points de mesure placés d'un côté de l'axe optique sont privilégiés par rapport à ceux qui sont placés de l'autre côté.

Aussi, lorsqu'il s'agira de contrôler la position par rapport à la piste, le circuit 30 calculera le signal $S_P$ donné par $S_P = (I_1 + I_2) - (I_3 + I_4)$.

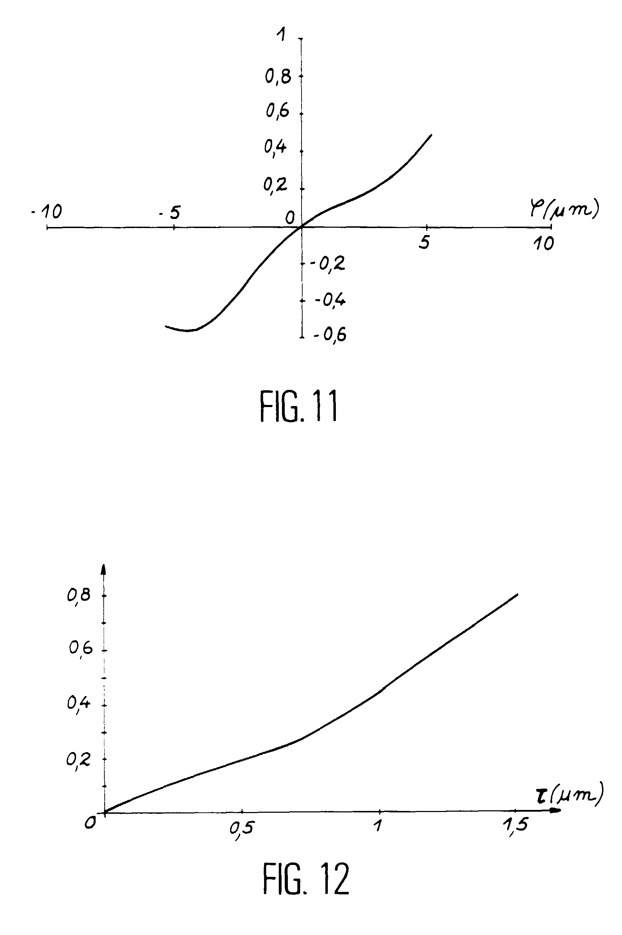

Toujours dans le cas d'un système ayant les mêmes caractéristiques que celles exposées ci-dessus (W=15μm, L=136μm), les figures 11 et 12 montrent les signaux normalisés obtenus respectivement pour la mesure de la défocalisation et la mesure du défaut de position, en fonction de l'erreur de focalisation φ et de l'erreur de suivi de piste τ, toutes deux exprimées en μm.

Ces signaux normalisés peuvent constituer des signaux d'erreur pour commander un actionneur (galvanométrique ou piézoélectrique ou de tout autre type) qui va déplacer des moyens optiques pour corriger les défauts de focalisation et/ou de position.

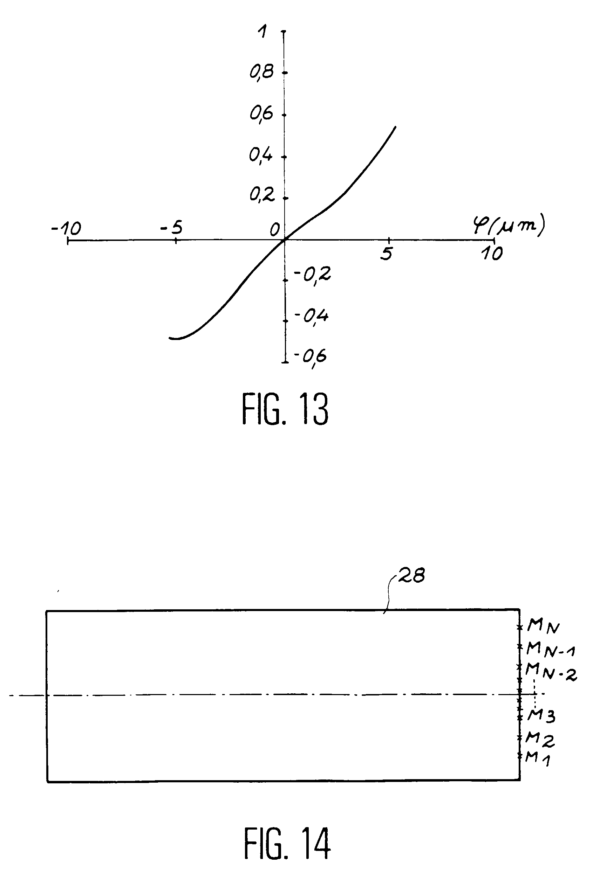

La figure 13 montre la réponse du circuit de contrôle de la focalisation en présence d'une petite erreur de position (τ=0,2μm) . On voit que la courbe normalisée obtenue est pratiquement identique à celle de la figure 11, ce qui montre l'indépendance des fonctions de contrôle de la focalisation et du suivi de piste. Cette indépendance s'explique par le fait que les effets mis en jeu lors de la mesure de la défocalisation (passage de 4 à 3 ou 5 maxima) sont de nature différente de ceux mis en jeu lors de la mesure de suivi de piste.

Le fonctionnement du dispositif a été expliqué dans le cas de 4 détecteurs pour 4 images en sortie du guide multimode.

On peut également utiliser un guide d'onde dont la longueur et la largeur sont telles qu'on obtient, au repos, pour une image centrée en entrée, 2 images en sortie de guide au lieu de 4. Dans ce cas, deux détecteurs $D_1$ et $D_2$ sont de préférence placés de façon à mesurer l'intensité en sortie de guide, en des points symétriques de chaque côté de l'axe optique.

On ne peut alors obtenir qu'un signal d'erreur de position ou de suivi de piste, qui est simplement proportionnel à la différence des signaux délivrés par chacun des détecteurs : $S_P = I_1 - I_2$.

Si le guide est tel qu'on obtient, au repos, pour une image centrée en entrée, 3 images en sortie, 3 détecteurs $D_1$, $D_2$, $D_3$ doivent permettre de détecteur l'intensité en 3 points en sortie de guide. L'un de ces détecteurs ($D_2$) permet par exemple de mesurer l'intensité sur l'axe optique, les deux autres ($D_1$ et $D_3$) en des points $M_1$ et $M_3$ symétriques par rapport à l'axe optique, là où les maxima se forment en sortie de guide, au repos.

Le signal d'erreur de position est donné par (ou proportionnel à) : $S_P = I_1 - I_3$.

Le signal d'erreur de focalisation : $S_F = I_2 - (I_1 + I_3)$.

Le cas de 4 images en sortie a déjà été traité ci-dessus.

Il reste à traiter le cas d'un guide dont les caractéristiques sont telles qu'on obtient au repos, pour une image centrée en entrée, N images en sortie (avec N>4).

Les N détecteurs (ou les N fibres optiques) seront par exemple répartis symétriquement par rapport à l'axe optique, de façon à détecter l'intensité en des points $M_i$ (i=1...N) où se forment les maxima en sortie de guide lorsque le faisceau d'entrée est correctement positionné et focalisé (voir figure 14, où la référence 28 désigne le guide multimode).

Si N est pair, $\frac{N}{2}$ détecteurs seront positionnés de façon à pouvoir détecter l'intensité en $\frac{N}{2}$ points positionnés d'un côté de l'axe, et $\frac{N}{2}$ autres détecteurs de façon à détecter l'intensité en $\frac{N}{2}$ autres points, symétriques des $\frac{N}{2}$ premiers points par rapport à l'axe optique.

Si N est impair, $\frac{N-1}{2}$ détecteurs seront disposés de manière à pouvoir détecter l'intensité en $\frac{N-1}{2}$ points d'un côté de l'axe, $\frac{N-1}{2}$ autres détecteurs en $\frac{N-1}{2}$ autres points, de l'autre côté de l'axe, le détecteur d'ordre $\frac{N+1}{2}$ détectant l'intensité en sortie de guide, sur l'axe optique.

Le signal d'erreur $S_P$ de position ou de suivi de piste sera proportionnel à :

- si N pair :

$$\sum_{k=1}^{N/2} I_k - \sum_{k=\frac{N}{2}+1}^{N} I_k ,$$

- si N impair :

$$\sum_{k=1}^{\frac{N-1}{2}} I_k - \sum_{k=\frac{N+3}{2}}^{N} I_k$$

Il est possible d'obtenir un signal d'erreur de position sans utiliser tous les détecteurs. Dans ce cas, il suffit de comparer les signaux délivrés par un ou plusieurs détecteurs placés du même côté par rapport à l'axe optique avec les signaux délivrés par le ou les détecteurs placés symétriquement par rapport à l'axe optique. Par exemple : $S_P$ peut être proportionnel à $D_N$-$D_1$ ou encore à $(D_N+D_{N-1})-(D_1+D_2)$.

Ou encore, d'une manière plus générale, $S_P$ peut être proportionnel à :

- si N pair :

$$\sum_{k=1}^{N/2} \alpha_k I_k - \sum_{k=\frac{N}{2}+1}^{N} \alpha_{N-k+1} I_k \ ,$$

- si N impair :

$$\sum_{k=1}^{\frac{N-1}{2}} \alpha_k I_k - \sum_{k=\frac{N+3}{2}}^{N} \alpha_{N-k+1} I_k \ ,$$

avec $\alpha_k$=0 ou 1 pour tout k, la valeur de chaque $\alpha_k$ étant fixée par l'utilisateur.

En ce qui concerne le signal d'erreur de focalisation le principe est de former une première somme d'un groupe de signaux mesurés en des points tous placés du même côté par rapport à l'axe optique, d'y ajouter une seconde somme d'un groupe de signaux mesurés en des points placés symétriquement par rapport à l'axe optique et de comparer cette somme totale à celle des signaux mesurés aux points "complémentaires".

Ainsi, le signal d'erreur $S_F$ de focalisation sera proportionnel à, par exemple :

- si N=4m :

$$\left( \sum_{k=1}^{m} I_k + \sum_{3m+1}^{N} I_k \right) - \sum_{k=m+1}^{3m} I_k \ ,$$

- si N=4m+1 :

$$\left( \sum_{k=1}^{m} I_k + \sum_{3m+2}^{N} I_k \right) - \left( \sum_{m+1}^{3m+1} I_k \right),$$

- si N=4m+2 :

$$\left(\sum_{k=1}^{m+1} I_k + \sum_{3m+2}^{N} I_k\right) - \left(\sum_{m+2}^{3m+1} I_k\right), \quad ou \quad \left(\sum_{k=1}^{m} I_k + \sum_{3m+3}^{N} I_k\right) - \sum_{m+1}^{3m+2} I_k$$

- Si N=4m+3 :

$$\left(\sum_{k=1}^{m+1} I_k + \sum_{k=3m+3}^{N} I_k\right) - \left(\sum_{m+2}^{3m+2} I_k\right).$$

D'autres combinaisons des $(Ik)_{k=1,...,n}$ peuvent être envisagées, les formules ci-dessus n'étant que des exemples.

Ces formules ou combinaisons peuvent également s'appliquer lorsqu'un détecteur "continu" est présent en sortie de guide, puisqu'on peut alors aisément mesurer les intensités en N points.

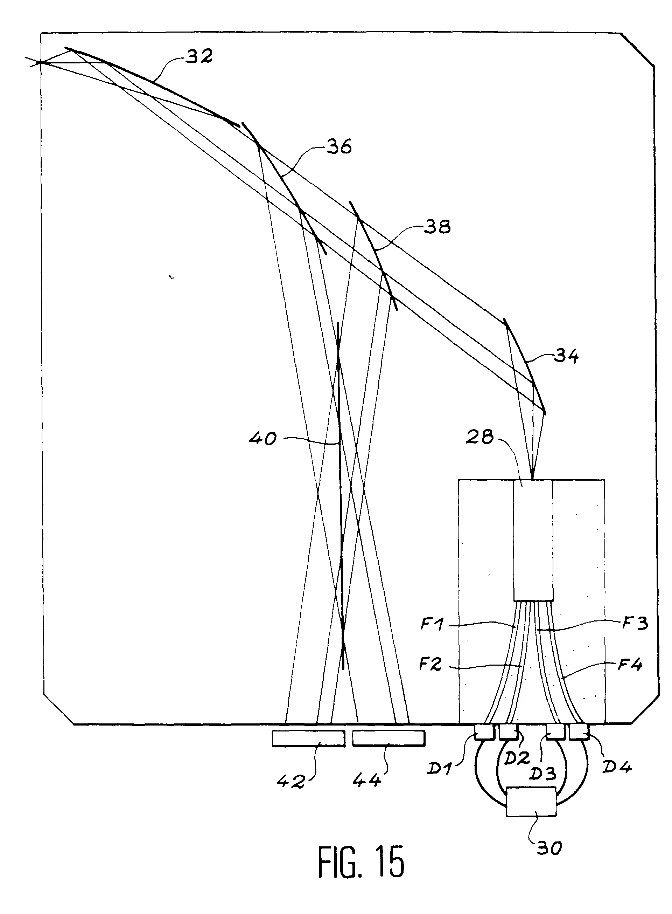

Le dispositif qui vient d'être décrit est parfaitement adapté aux structures optiques intégrées. En particulier, il peut être associé à la tête de lecture magnéto-optique décrite dans le document EP 270 429 (US-4 796 226), afin d'en faire un circuit intégré de détection complet, compatible avec les têtes de lecture/écriture classiques. Un tel circuit intégré est représenté sur la figure 15, où les références 28, 30, 32, 34, $F_1$-$F_4$, $D_1$-$D_4$ désignent les mêmes éléments que sur la figure 6. Les références 36 et 38 désignent respectivement un séparateur de polarisation et un convertisseur de polarisation, la référence 40 une lame semi-réfléchissante et les références 42 et 44 deux photodétecteurs. L'ensemble des éléments 36, 38, 40 constitue un système interférométrique. Le circuit fonctionne de la manière suivante. La lumière réfléchie par un disque magnéto-optique voit sa direction de polarisation tournée d'un angle $\pm\theta_F$ suivant l'information écrite sur le disque (0 ou 1). Lors du couplage dans le circuit optique intégré, cette lumière se décompose sur les deux modes de propagation TE et TM de la structure optique intégrée. Le séparateur de polarisation 36 permet alors de séparer les modes TE (transmis) et TM (réfléchi). Le convertisseur de polarisation 38 permet de générer un faisceau TM (dont la phase est fixe) à partir du faisceau TE. La lame semi-réfléchissante 40 permet de faire interférer les deux faisceaux TM (TM signal dont la phase représente l'information à détecter et TM converti). On obtient ainsi deux voies de mesure en opposition de phase, qui permettent de réaliser une détection différentielle (42, 44). Parallèlement, le convertisseur 38 transmet une partie du faisceau TE qui est focalisé par le miroir 34 en entrée du guide 28. Ce faisceau TE est alors analysé pour contrôler la position et/ou la focalisation de la lumière réfléchie par le disque comme décrit précédemment.

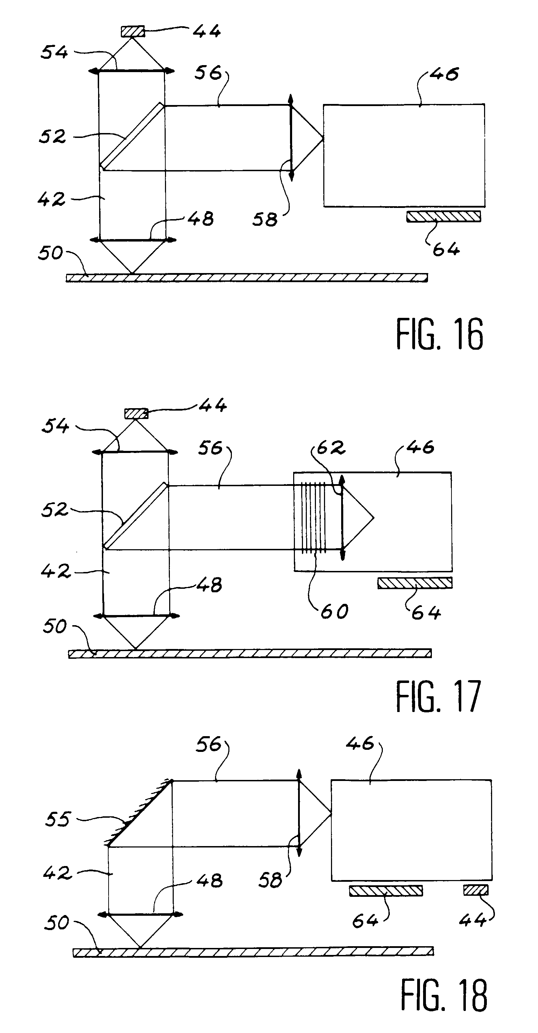

Les figures 16 à 18 représentent des exemples de tête de lecture magnéto-optique classique équipée d'un dispositif intégré de détection. Sur ces figures, un faisceau 42 est émis par une diode laser 44 qui peut être extérieure (figures 16, 17) au circuit optique intégré 46 comportant un dispositif de contrôle selon l'invention, ou qui peut être intégrée ou hybridée sur ce circuit (figure 18). Des moyens de focalisation 48 focalisent le faisceau 42 sur un disque optique ou magnéto-optique 50. Les références 52 et 54 (figures 16, 17) désignent respectivement un cube ou une lame semi-réfléchissante et un objectif de collimation. Sur la figure 18, la référence 55 désigne un miroir.

Le faisceau réfléchi 56 traverse un objectif de couplage 58 (figures 16, 18) ou bien un réseau coupleur 60 et des moyens de focalisation 62 (figure 17) avant d'entrer dans un dispositif de contrôle selon l'invention, non représenté en détail sur les figures 16-18. La référence 64 désigne le système de détecteurs en sortie du guide multimode (ou de la pluralité de guides monomodes) de ce dispositif.

Dans de tels dispositifs, à partir des signaux d'erreurs $S_P$ et $S_F$ déterminés par le dispositif de contrôle, un asservissement ou des moyens de correction situés entre les moyens d'analyse 30 du dispositif et les moyens optiques 48 peuvent être prévus pour maintenir la position et la focalisation du faisceau 42 sur une piste donnée du disque.

**Revendications**

1.   Dispositif d'optique intégrée pour le contrôle de la position et/ou de la focalisation d'un faisceau lumineux comportant une structure de guidage en optique intégrée, caractérisé en ce qu'il comporte en outre :

   - un guide d'onde multimode (28) ou bien un ensemble de guides monomodes répartis de façon à pouvoir échanger de l'énergie, qui est intégré à la structure de guidage et qui est apte, lorsque la répartition du faisceau lumineux qui est dirigé à l'entrée du guide ou de l'ensemble des guides comporte un seul maximum, à transformer cette répartition en une répartition à N maxima, $N \geq 2$ en sortie du guide ou de l'ensemble de guides,

- des moyens de détection ($D_1$, $D_2$, $D_3$, $D_4$) aptes à mesurer la répartition de l'intensité en sortie du guide d'onde ou de l'ensemble des guides monomodes,
- des moyens (30) d'analyse de la répartition d'intensité, reliés aux moyens de détection.

**2.** Dispositif selon la revendication 1, caractérisé en ce que les moyens de détection sont disposés de façon à pouvoir mesurer l'intensité en au moins N points ($M_1$, ..., $M_N$) en sortie du guide ou de l'ensemble de guides d'onde, appelés points de mesure.

**3.** Dispositif selon la revendication 2, caractérisé en ce que les moyens de détection sont des photodétecteurs placés aux N points de mesure.

**4.** Dispositif selon la revendication 2, caractérisé en ce que les moyens de détection comprennent des microguides ou des fibres optiques ($F_i$) en nombre N reliant les N points de mesures à des photodétecteurs.

**5.** Dispositif selon l'une des revendications 3 ou 4, caractérisé en ce qu'au moins un photodétecteur est associé à chaque point de mesure.

**6.** Dispositif selon la revendication 1, caractérisé en ce qu'il comporte en outre des moyens optiques (34) intégrés à la structure de guidage pour focaliser le faisceau lumineux à l'entrée du guide d'onde multimode ou de l'ensemble des guides monomodes.

**7.** Dispositif selon l'une des revendications 1 ou 6, caractérisé en ce qu'il comprend en outre des moyens optiques (32) agrandisseurs du faisceau lumineux.

**8.** Dispositif selon la revendication 1, caractérisé en ce que les moyens de détection comprennent un détecteur apte à fournir une image continue de la répartition d'intensité en sortie du guide.

**9.** Dispositif selon la revendication 8, caractérisé en ce que les moyens d'analyse peuvent déduire de l'image continue les intensités $I_n$ ($1 \leq n \leq N$) en N points de mesure, ainsi qu'un signal d'erreur de focalisation $S_F$ et/ou un signal d'erreur de position $S_P$.

**10.** Dispositif selon la revendication 8, caractérisé en ce qu'un signal d'erreur de focalisation $S_F$ et/ou d'erreur de position $S_P$ peut être obtenu par comparaison avec des répartitions d'intensité de référence.

**11.** Dispositif selon la revendication 2, caractérisé en ce que les moyens d'analyse (30) peuvent calculer les intensités $I_n$ ($1 \leq n \leq N$) aux N points de mesure et en déduire un signal d'erreur de position $S_P$ et/ou un signal d'erreur de focalisation $S_F$.

**12.** Dispositif selon l'une des revendications 9 ou 11, caractérisé en ce que :

- si N=2 : $S_P$ est proportionnel à $I_2$-$I_1$,
- si N=3 : $S_P$ est proportionnel à $I_3$-$I_1$, et $S_F$ est proportionnel à $I_2$-($I_1$+$I_3$),
- si $N \geq 4$ : $S_P$ est proportionnel à

$$\sum_{k=1}^{N/2} \alpha_k I_k - \sum_{k=\frac{N}{2}+1}^{N} \alpha_{N-k+1} I_k$$

si N est pair ou à

$$\sum_{k=1}^{\frac{N-1}{2}} \alpha_k I_k \; - \; \sum_{k=\frac{N+3}{2}}^{N} \alpha_{N-k+1} I_k$$

si N est impair avec $\alpha_k=0$ ou 1 pour tout k et,

- si N=4m : $S_F$ est proportionnel à

$$\left( \sum_{k=1}^{m} I_k + \sum_{3m+1}^{N} I_k \right) - \sum_{k=m+1}^{3m} I_k$$

(m entier $\geq 1$) ou,

- si N=4m+1, $S_F$ est proportionnel à

$$\left( \sum_{k=1}^{m} I_k + \sum_{3m+2}^{N} I_k \right) - \left( \sum_{m+1}^{3m+1} I_k \right)$$

ou,

- Si N=4m+2, $S_F$ est proportionnel à

$$\left( \sum_{k=1}^{m+1} I_k + \sum_{3m+2}^{N} I_k \right) - \left( \sum_{m+2}^{3m+1} I_k \right) \quad ou, \quad à \quad \left( \sum_{k=1}^{m} I_k + \sum_{3m+3}^{N} I_k \right) - \sum_{m+1}^{3m+2} I_k$$

ou

- Si N=4m+3, $S_F$ est proportionnel à

$$\left( \sum_{k=1}^{m+1} I_k + \sum_{k=3m+3}^{N} I_k \right) - \left( \sum_{m+2}^{3m+2} I_k \right).$$

**13.** Dispositif de lecture d'un disque optique ou magnéto-optique (50) comportant un dispositif selon une des revendications 9 à 12, des moyens (44) pour émettre un faisceau lumineux (42), des moyens (48) pour focaliser ce faisceau sur le disque, des moyens de correction entre les moyens d'analyse (30) et les moyens optiques (48) pour maintenir la position et/ou la focalisation du faisceau (42) sur une piste donnée du disque (50).

**Patentansprüche**

**1.** Integrierte optische Vorrichtung zur Überwachung der Position und/oder der Fokussierung bzw. Brennpunkteinstellung eines Lichtbündels, mit einer integrierten optischen Leitstruktur, dadurch gekennzeichnet, daß sie ferner umfaßt:

- einen Multimode-Wellenleiter (28) oder eine Anordnung von Monomode-Leitern, die so verteilt sind, daß sie Energie austauschen können, wobei er/sie in die Leitstruktur integriert und in der Lage ist, wenn die Verteilung des auf den Eingang des Leiters oder der Leiter-Anordnung gerichteten Lichtbündels ein einziges Maximum aufweist, diese Verteilung in eine Verteilung von N Maxima (N $\geq$ 2) am Ausgang des Leiters oder der Leiter-Anordnung umzuwandeln,
- Erfassungsmittel (D$_1$, D$_2$, D$_3$, D$_4$), die in der Lage sind, die Verteilung der Intensität bzw. Lichtstärke am Ausgang des Wellenleiters oder der Anordnung von Monomode-Leitern zu messen,
- Mittel (30) zur Analyse der Intensitätsverteilung, die mit den Erfassungsmitteln verbunden sind.

2. Vorrichtung gemäß Anspruch 1, dadurch gekennzeichnet, daß die Erfassungsmittel derart angeordnet sind, daß sie die Intensität an mindestens N Punkten (M$_1$, ..., M$_N$) am Ausgang des Wellenleiters oder der Leiter-Anordnung, die als Meßpunkte bezeichnet werden, messen kann.

3. Vorrichtung gemäß Anspruch 2, dadurch gekennzeichnet, daß die Erfassungsmittel an den N Meßpunkten plazierte Photodetektoren sind.

4. Vorrichtung gemäß Anspruch 2, dadurch gekennzeichnet, daß die Erfassungsmittel Mikroleiter oder optische Fasern (F$_i$) einer Anzahl N umfassen, welche die N Meßpunkte mit Photodetektoren verbinden.

5. Vorrichtung gemäß Anspruch 3 oder 4, dadurch gekennzeichnet, daß jedem Meßpunkt mindestens ein Photodetektor zugeordnet ist.

6. Vorrichtung gemäß Anspruch 1, dadurch gekennzeichnet, daß sie außerdem in die Leiterstruktur integrierte optische Mittel (34) aufweist, um das Lichtbündel am Eingang des Multimode-Wellenleiters oder der Anordnung von Monomode-Leitern zu fokussieren.

7. Vorrichtung gemäß Anspruch 1 oder 6, dadurch gekennzeichnet, daß sie außerdem das Lichtbündel vergrößernde optische Mittel (32) aufweist.

8. Vorrichtung gemäß Anspruch 1, dadurch gekennzeichnet, daß die Erfassungsmittel einen Detektor umfassen, der in der Lage ist, ein kontinuierliches Bild der Intensitätsverteilung am Ausgang des Leiters zu liefern.

9. Vorrichtung gemäß Anspruch 8, dadurch gekennzeichnet, daß die Analysemittel aus dem kontinuierlichen Bild die Intensitäten In (1$\leq$n$\leq$N) an N Meßpunkten sowie ein Fokussier-Fehlersignal S$_F$ und/oder ein Positions-Fehlersignal S$_P$ ableiten können.

10. Vorrichtung gemäß Anspruch 8, dadurch gekennzeichnet, daß durch Vergleich mit den Bezugs-Intensitätsverteilungen ein Fokussier-Fehlersignal S$_F$ und/oder ein Positions-Fehlersignal S$_p$ erhalten werden kann.

11. Vorrichtung gemäß Anspruch 2, dadurch gekennzeichnet, daß die Analysemittel (30) die Intensitäten I$_n$ (1$\leq$n$\leq$N) an den N Meßpunkten berechnen und hiervon ein Fokussier-Fehlersignal S$_F$ und/oder ein Positions-Fehlersignal S$_p$ ableiten können.

12. Vorrichtung gemäß Anspruch 9 oder 11, dadurch gekennzeichnet, daß

- wenn N=2 : S$_p$ proportional zu I$_2$ - I$_1$ ist,
- wenn N=3 : S$_p$ proportional zu I$_3$ - I$_1$ ist, und S$_F$ proportional zu I$_2$-(I$_1$ + I$_3$) ist,
- wenn N$\geq$4 : S$_p$ proportional zu

$$\sum_{k=1}^{N/2} \alpha_k I_k - \sum_{k=\frac{N}{2}+1}^{N} \alpha_{N-k+1} I_k \quad ,$$

wenn N geradzahlig ist, oder zu

$$\sum_{k=1}^{\frac{N-1}{2}} \alpha_k I_k - \sum_{k=\frac{N+3}{2}}^{N} \alpha_{N-k+1} I_k$$

ist, wenn N ungeradzahlig ist, wobei $\alpha_k$=0 oder 1 für jedes k ist, und

- wenn N=4m : $S_F$ proportional zu

$$\left(\sum_{k=1}^{m} I_k + \sum_{3m+1}^{N} I_k\right) - \sum_{k=m+1}^{3m} I_k$$

ist (m ganzzahlig $\geq 1$), oder

- wenn N=4m+1, $S_F$ proportional zu

$$\left(\sum_{k=1}^{m} I_k + \sum_{3m+2}^{N} I_k\right) - \left(\sum_{m+1}^{3m-1} I_k\right)$$

ist, oder

- wenn N=4m+2, $S_F$ proportional zu

$$\left(\sum_{k=1}^{m+1} I_k + \sum_{3m+2}^{N} I_k\right) - \left(\sum_{m-2}^{3m-1} I_k\right) \quad ,$$

oder zu

$$\left(\sum_{k=1}^{m} I_k + \sum_{3m-3}^{N} I_k\right) - \sum_{m+1}^{3m+2} I_k$$

ist, oder

- wenn N=4m+3, $S_F$ proportional zu

$$\left(\sum_{k=1}^{m-1} I_k + \sum_{k=3m+3}^{N} I_k\right) - \left(\sum_{m+2}^{3m-2} I_k\right)$$

ist.

13. Vorrichtung zum Lesen einer optischen oder magneto-optischen Platte (50), mit einer Vorrichtung gemäß einem der Ansprüche 9 bis 12, Mitteln (44) zum Emittieren eines Lichtbündels (42), Mitteln (48) zum Fokussieren dieses Bündels auf die Platte, sowie Korrekturmitteln zwischen den Analysemitteln (30) und den optischen Mitteln (48) zum Beibehalten der Position und/oder der Fokussierung des Lichtbündels (42) auf eine(r) vorgegebene(n) Spur der Platte (50).

**Claims**

1. Integrated optics device for checking the position and/or the focusing of a light beam having an integrated optics guidance structure, characterized in that it also comprises:

   - a multimode waveguide (28) or an array of monomode guides distributed so as to be able to exchange energy, which is integrated into the guidance structure and able, when the distribution of the light beam directed at the input of the guide or the guide array has a single maximum, to transform this distribution into a distribution having N maxima ($N \geq 2$) at the output of the guide or guide array,
   - detection means ($D_1$, $D_2$, $D_3$, $D_4$) able to measure the distribution of the intensity at the output of the waveguide or guide array,
   - means (30) for analyzing the intensity distribution connected to the detection means.

2. Device according to claim 1, characterized in that the detection means are positioned in such a way as to be able to measure the intensity at at least N output points ($M_1$, ... $M_N$) of the guide or waveguide array, called measuring points.

3. Device according to claim 2, characterized in that the detection means are photodetectors located at N measuring points.

4. Device according to claim 2, characterized in that the detection means incorporate microguides or optical fibres ($F_i$) in a number N connecting the N measuring points to photodetectors.

5. Device according to either of the claims 3 and 4, characterized in that at least one photodetector is associated with each measuring point.

6. Device according to claim 1, characterized in that it also comprises optical means (34) integrated into the guidance structure for focusing the light beam at the input of the multimode waveguide or the array of monomode guides.

7. Device according to either of the claims 1 and 6, characterized in that it comprises optical means (32) for enlarging the light beam.

8. Device according to claim 1, characterized in that the detection means incorporate a detector able to supply a continuous image of the intensity distribution at the guide output.

9. Device according to claim 8, characterized in that the analysis means are able to deduce from the continuous image the intensities In ($1 \leq n \leq N$) at N measuring points, as well as a focusing error signal $S_F$ and/or a position error signal $S_P$.

10. Device according to claim 8, characterized in that a focusing error signal $S_F$ and/or a position error signal $S_P$ is obtainable by comparison with reference intensity distributions.

11. Device according to claim 2, characterized in that the analysis means are able to calculate the intensities $I_n$ ($1 \leq n \leq N$) at N measuring points and from same is deduced a position error signa $S_P$ /or a focusing error signal $S_F$.

12. Device according to either of the claims 9 and 11, characterized in that:

    - if N = 2: $S_P$ is proportional to $I_2$-$I_1$,
    - if N = 3: $S_P$ is proportional to $I_3$=$I_1$, and
      $S_F$ is proportional to $I_2$-($I_1$+$I_3$),
    - if N≥4: $S_P$ is prportional to

$$\sum_{k=1}^{N/2} \alpha_k I_k - \sum_{k=\frac{N}{2}+1}^{N} \alpha_{N-k+1} I_k$$

if
N is even or at

$$\sum_{k=1}^{\frac{N-1}{2}} \alpha_k I_k - \sum_{k=\frac{N+3}{2}}^{N} \alpha_{N-k+1} I_k$$

if N is uneven with $\alpha_k = 0$ or 1 for any k and
- if N = 4M: $S_F$ is proportional to

$$\left( \sum_{k=1}^{m} I_k + \sum_{3m+1}^{N} I_k \right) - \sum_{k=m+1}^{3m} I_k$$

(m integer $\geq$1) or,
if N = 4m+1, $S_F$ is proportional to

$$\left( \sum_{k=1}^{m} I_k + \sum_{3m+2}^{N} I_k \right) - \left( \sum_{m+1}^{3m+1} I_k \right)$$

or,
- if N = 4m+2, $S_F$ is proportional to

$$\left( \sum_{k=1}^{m+1} I_k + \sum_{3m+2}^{N} I_k \right) - \left( \sum_{m+2}^{3m+1} I_k \right) \quad ou, \quad à \quad \left( \sum_{k=1}^{m} I_k + \sum_{3m+3}^{N} I_k \right) - \sum_{m+1}^{3m+2} I_k$$

or
- if N = 4M+3, $S_F$ is proportional to

$$\left( \sum_{k=1}^{m+1} I_k + \sum_{k=3m+3}^{N} I_k \right) - \left( \sum_{m+2}^{3m+2} I_k \right).$$

13. Device for reading an optical or magneto-optical disk (50) incorporating a device according to one of the claims 9 to 12, means (44) for emitting a light beam (42), means (48) for focusing said beam onto the disk, correcting means between the analysis means (30) and the optical means (48) for maintaining the position and/or focusing of the beam (42) on a given track of the disk (50).

FIG. 1

FIG. 2

FIG. 3a

FIG. 3b

FIG. 4

FIG. 5

FIG. 6

FIG. 7 a

FIG. 7 b

FIG. 8 a

FIG. 8 b

FIG. 9a

FIG. 9b

FIG. 10 a

FIG. 10 b

24

FIG. 11

FIG. 12

FIG. 13

FIG. 14

FIG. 15

FIG. 16

FIG. 17

FIG. 18